(19) **Europäisches Patentamt / European Patent Office / Office européen des brevets**

(11) **EP 4 588 352 A1**

(12) ## EUROPEAN PATENT APPLICATION

(43) Date of publication:
**23.07.2025 Bulletin 2025/30**

(21) Application number: **24152387.7**

(22) Date of filing: **17.01.2024**

(51) International Patent Classification (IPC):
**A21D 13/32** (2017.01)    **A21D 13/36** (2017.01)
**A23G 9/50** (2006.01)    **A21C 15/02** (2006.01)
**A23G 9/48** (2006.01)

(52) Cooperative Patent Classification (CPC):
**A23G 9/506; A21C 9/066; A21C 15/007;
A21C 15/02; A21C 15/025; A21D 13/32;
A21D 13/36; A23G 9/48; F26B 3/04; F26B 3/347;
F26B 21/083**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Astra Sweets**
**2300 Turnhout (BE)**

(72) Inventors:
• **Vervoort, Michel**
  **2275 Poederlee (BE)**
• **Geerts, Patrick**
  **2140 Borgerhout (BE)**

(74) Representative: **IP HILLS NV**
**Bellevue 5/501**
**9050 Gent-Ledeberg (BE)**

(54) **METHOD TO PROVIDE PACKAGES COMPRISING A PLURALITY OF FILLED WAFERS**

(57)    A method to provide a package comprising a plurality of filled wafers, each filled wafer comprising an unleavened food sheet casing, said casing enclosing a filling. The method comprises
- proving unleavened food sheet casings, the casings each enclosing a filling;
- treating these filled unleavened food sheet casings with
  ◦ a thermal treatment wherein the filled unleavened food sheet casings are subjecting to an increased temperature and/or
  ◦ subjecting the unleavened food sheet casings with filling to a drying treatment;
- packing said treated filled wafers in an airtight-sealed packaging.

Fig. 1

EP 4 588 352 A1

## Description

### Field of the Invention

The present invention generally relates to filled wafers comprising an unleavened food sheet casing, such as a sherbet filled wafer, e.g. a so-called flying saucer, and packages comprising a plurality of filled wafers.

### Background of the Invention

Filled wafers comprising an unleavened food sheet casing, such as a sherbet filled wafer, e.g. a so-called flying saucer are well known. Though several shapes have been tried in the market, only the two disk shaped unleavened food sheet having a substantially flat rim encompassing a spherical cap shaped concavity, the substantially flat rims being sealed one to the other, and the void space between the sheets being partially filled with sherbet have stood the test of time.

Various modifications in colour of the unleavened food sheets, and modifications to the taste of the filling, have been commercialised. However basically the outlook of and the feeling when consuming the 'flying saucer' has not been changed since the early days back in the 50s of the twentieth century. A method to provide such flying saucers is described in BE1021600B1.

There is a tendency in food consumption in general to ask for other "mouth feelings" or "eating experience when consuming food products. For filled wafers, consumers are looking for a more crispy or crunchy product.

### Summary of the Invention

in line with the invention, an unleavened food sheet casing, said casing being closed and enclosing a filling, is subjected to a thermal treatment after filling and closing the unleavened food sheet casing.

Hence, according to this first aspect of the invention, a method to provide a package comprising a plurality of filled wafers is provided, each filled wafer comprising an unleavened food sheet casing, said casing enclosing a filling, wherein said method comprises

- Proving unleavened food sheet casings, the casings each enclosing a filling;
- treating these filled unleavened food sheet casings with

    ○ a thermal treatment wherein the filled unleavened food sheet casings are subjecting to an increased temperature and/or
    ○ subjecting the unleavened food sheet casings with filling to a drying treatment;

- packing said treated filled wafers in an airtight-sealed packaging.

A package comprising a plurality of filled wafers may also be referred to as just a package of filled wafers or a package comprising filled wafers. Though the mechanism and reason underlying the effect obtained is not well understood, it was found that this thermal and/or drying treatment after filling and closing the unleavened food sheet casings, causes the provided filled wafers to have a different and more pleasant mouth sense as compared the ones not thermally treated and/or dried. The filled wafers sense more crispy, crunchier, and have a less tendency to stick to the palate of the consumer. This crispiness can be obtained without the need to add additives to the recipe of the batter, or without the need to apply any coating of layer to the filled unleavened food sheet casings of the filled wafer. This effect, surprisingly, is permanent and is maintained when the treated filled wafers are airtight packed, even after a long retention period.

According to some embodiments, the filled unleavened food sheet casings may be subjected to at least a thermal treatment.

According to some embodiments, the thermal treatment may comprise heating the filled unleavened food sheet casings, either individually or simultaneously, to a temperature of at least 30°C.

More preferred, the filled unleavened food sheet casings, either individually or simultaneously, are subjected to a temperature of at least 35°C, even more preferred to a temperature of at least 40 more, most preferably to a temperature of at least 55°C, such as 60°C. The filled unleavened food sheet casings, either individually or simultaneously, may be subjected to a temperature of less than or equal to 150°C, even more preferred to a temperature of less than or equal to 125°C, such as less than or equal to 100°C.

According to some embodiments, the thermal treatment may comprise heating the filled unleavened food sheet casings, either individually or simultaneously, during a period of at least 10 sec.

More preferred, the filled unleavened food sheet casings, either individually or simultaneously, are subjected to thermal treatment during a period of at least 60 sec, even more preferred during a period of at least 20 minutes, even at least 30 minutes, such as about 1 hour or longer. The filled unleavened food sheet casings, either individually or simultaneously, may be subjected to a thermal treatment of less than or equal to 3 hours , even more preferred less than or equal to 2 hours, such as less than or equal to 90 minutes.

According to some embodiments, the thermal treatment may have a temperature profile.

The thermal treatment having a temperature profile means that during the treatment, the temperature to which the filled unleavened food sheet casings are subjecting change in a controlled way over time. Preferably the temperature of the treatment is ramped up to a maximum temperature, which thereafter is held constant, at least over a period of time. The ramping up may be gradually or in two or more steps.

According to some embodiments, the thermal treatment may comprise a ventilated thermal treatment action.

During the thermal treatment, the environment in which the thermally treated filled unleavened food sheet casings are treated, may be ventilated at least during a part of the treatment time. The air surrounding the thermally treated filled unleavened food sheet casings is refreshed which may have the effect that the humidity, released by the filled unleavened food sheet casings, is evacuated. As such this thermal treatment is also a drying treatment at the same time.

The thermal treatment may be a microwave treatment of the filled unleavened food sheet casings. In such microwave treatment, the filled unleavened food sheet casings are subjected to the increased temperature during a relatedly short period in time, such as during a period of at least 10 sec, such as at least 20 sec, and preferably less than 90 seconds.

The thermal treatment may comprise subjecting the filled unleavened food sheet casings to an increased temperature in a closed or open box or furnace, heating the filled wafers with a stream of heated air flowing over the filled wafers or through ta stack of, or a box filled with filled wafers, heating the filled wafers by infrared irradiation, subjecting the filled wafers to a cycle in a convention oven with hot air, and many more. For such thermal treatments, the filled unleavened food sheet casings, either individually or simultaneously, are subjected to thermal treatment during a period of at least 60 sec, more preferred at least 90 seconds, even more preferred during a period of at least 20 minutes, even at least 30 minutes, such as about 1 hour or longer, but of less than or equal to 3 hours , even more preferred less than or equal to 2 hours, such as less than or equal to 90 minutes.

The thermal treatment may simultaneously be a drying treatment as well.

A drying treatment may make use of dried air, and may be subjecting the filled unleavened food sheet casings to a means using a desiccant drying wheel, such as a Munters desiccant drying wheel to provide dried air. Alternatively the drying treatment may be a radiofrequency drying step.

Drying treatment may be e.g. subjecting the filled wafers to a stream of air at ambient or slightly increased temperature, but being extremely dry, like having a relative humidity content of more than or equal to 1 %, e.g. more than or equal to 5%, such as more than or equal to 10%, such as more than or equal to 20%, but less than or equal to 70%, such as less than or equal to 65% or even less than or equal to 60%.

According to some embodiments, the thermal treatment of the filled unleavened food sheet casings and/or the drying treatment may provide thermally treated filled unleavened food sheet casings having a water content of more than or equal to 0.5%w and less than or equal to 5%w.

This %w is calculated on the total weight of the filled unleavened food sheet casings after treatment. More preferred, the water content obtained is more than or equal to 0.5%w, such as more than or equal to 1 %w, even more than or equal to 1.5%w, and less than or equal to 5%w, such as less than or equal to 4.5%w..

The method further comprises the step of packaging the filled unleavened food sheet casings in an airtight, hence closed packing after said treatment, i.e. the thermal treatment and/or drying treatment. Packing is done in an airtight-sealed packaging. This is to be understood as packing in a closed and sealed packaging. Preferably the airtight-sealed packaging is provided from packaging product having a water vapor transmission rate (WVTR) of less than or equal to 0.55 gram per square meter per day ($g/m^2/d$). more preferred, the WVTR is less than or equal to 0.5 $g/m^2/d$, e.g. less than or equal to 0.45 $g/m^2/d$, such as less than or equal to 0.4 $g/m^2/d$.

Obviously, in case of a thermal treatment, the packaging is performed at least after cooling the thermally treated filled unleavened food sheet casings to about ambient. Possibly the treated and optionally cooled filled unleavened food sheet casings may remain in a buffer storage, preferably a closed buffer storage, such as an airtight closed or sealed casing. Most preferably the treated and optionally cooled filled unleavened food sheet casings are packaged within less than or equal to 30 days after the thermal or drying treatment.

The storage and/or packaging of the thermally treated and cooled filled unleavened food sheet casings is performed in conditioned circumstances. The ambient humidity is preferably kept in a range of 40% to 60% relative humidity, e.g. 50% rH, and the ambient temperature is preferably kept in a range of 15 to 25°C, e.g. 20°C.

The packaging may be a foil- or film-based packaging. Such packaging may be sealed, i.e. airtight sealed, and preferably used metalized film or sheets like alumina coated films. The packaging may be a box or container, e.g. a polypropylene (PP) or polyethylene (PE) box, which is a sealed and airtight box, like a sealed airtight polymer box. As an example, a tamper-evident and/or sealed airtight pot or box from transparent or translucent polymer may be used. The plurality of filled wafers may range from 10 to 1500 or even more. Typical numbers are e.g. 20, 25, 50, 100, 200, 500 or any number between 10 and 1500.

Unleavened food sheet, i.e. unrisen food sheet, also known as "eatable paper" is known in the art. The unleavened food sheet is free of leaven, hence made without leaven such as yeast or baking powder. It is a thin sheet of baked dough, comprising water, starch and optionally colorants and other additives, like viscosity modifiers. It is typically sugarless. The thickness of the unleavened food sheet may range from 0.25mm to 2.5 mm, preferably from 0.5mm to 2 mm, most preferably from 0.9mm to 1.1mm, e.g. 1mm. The unleavened food sheet is also referred to as "wafer", the eatable paper used a bread in the Christian ritual of the Eucharist, i.e. the sacramental bread, or host. Immediately after baking, this baked unleavened food sheet is non-elastic and fragile, as it is almost completely composed of starch only. These wafers may not be confused with wafers being made from starch and sugar and a raising agent, and which may be referred to as waffles. Such baked batter or dough provides an elastic, ductile baked product immediately after baking and shows a totally different behaviour.

A typical filled wafer is better known as a "flying saucer", where the casing is partially filled with sherbet filling.

According to some embodiments, the thickness of the unleavened food sheet may range from 0.25mm to 2.5mm.

Typically, the starch, or flour, used is starch from rice, wheat, corn, potatoes or a combination of those, although starch from other sources may be used as well, optionally in combination with starch or flour, originating from rice, wheat, corn, potatoes or a combination of those.

The casing of the filled wafer may comprise more than one unleavened food sheets, e.g. 2, 3, 4 or even more. However preferably the casing of the filled wafer is provided by two unleavened food sheets.

According to some embodiments, the filled wafer may comprise two unleavened food sheets, each providing a part of the casing, said two unleavened food sheets being connected one to the other thereby closing the casing.

Unleavened food sheets of the casing may be glued one to the other by an eatable glue, however unleavened food sheets typically have the tendency to adhere one to the other when water is applied to the side of the unleavened food sheet to stick to another unleavened food sheet. Though it may be sufficient to wet one of the sides of the sheets to be brought in contact with each other, also both sides of the sheets to be brought in contact with each other may be wetted. Once the wetted sides are in contact, a pressure may be applied to the contacting surfaces to increase the adherence.

According to some embodiments, each of said two unleavened food sheets may have a substantially flat rim, encompassing a spherical cap shaped concavity, said substantially flat rims being connected one to the other thereby closing the casing.

According to some embodiments, the step of connecting of the two unleavened food sheets may comprise wetting at least one of said substantially flat rim with water, and contacting, optionally pressing the two substantially flat rims to each other.

Turning to a method to provide an unleavened food sheet, such sheet is provided by baking a batter made from starch, usually corn or rice starch, water, some oil and colorants. The oil obviously is to be food grade oil, like maize oil, sunflower oil, rapeseed oil and alike. The content of starch or flour in the batter is preferably in the range of 50 kg to 80 kg per 100l water. The content of oil in the batter is preferably in the range of 0.05 kg to 1.5 kg per 100 litre water. In case colorants or aroma is present, such colorants and/or aroma together does not go beyond 1kg per 100 litre water of the batter, and is usually in the range of 0.0005 kg to 1 kg for 100 litre water. The content of other additives, like viscosity modifiers and alike, in the batter is preferably in the range of 0 to 5 kg per 100 litre water. The batter is preferably sugar-free.

The batter is provided to a baking plate as a thin layer, which is thereafter heated to a temperature in the range of 100°C to 250°C over a short period of time, most preferably in the range of 125°C to 150°C, during a period of 0.5 to 1.5 minutes. The water, which may provide up to 2/3 of the batter, will evaporate, leaving a hot, thin and brittle baked unleavened food sheet. To provide a shaped sheet, instead of a flat sheet, the batter is provided on a first side of set of baking trays, comprising either one or a plurality of protrusions (providing the male baking tray) or one or a plurality of recesses (providing the female baking tray). Once the batter is provided, the male and female baking trays are positioned one above the other. The recess or recesses and protrusion or protrusions are well positioned, such that the batter can be provided as a relatively thin layer between two baking trays, being a male and a female baking tray, which are positioned with the protrusions extending in the recesses, but leaving a narrow space filled with batter. After baking the batter, a profiled but brittle baked unleavened food sheet is provided having a flat sheet with indentations where the protrusions and recesses were present during baking.

This baked unleavened food sheet cools down very rapidly seen the little heat content in the sheet. However, the cooled baked unleavened food sheet still comprises little to no humidity, making it amongst others difficult to handle, may cause the sheet to curl, and may provide sheets for which the dimensions (length and width) may vary one from the other. By exposing the baked unleavened food sheet to an environment with controlled humidity and temperature over a period of time, the baked unleavened food sheet may stabilise in shape and dimension, and may become less brittle.

It was found that preferably the water content or humidity of the baked unleavened food sheet is brought to a level above 1%w, even above 2%w, or even above higher threshold values, and/or the temperature of the baked unleavened food sheet is brought to a level less than or equal to 100°C or cooler prior to laser etching of said mark in said unleavened food sheet.

Such water content or humidity may be obtained by subjecting the baked unleavened food sheet to a steam treatment, using saturated steam for a relative short period of time. Alternatively, this water content or humidity may be obtained by keeping the baked unleavened food sheet in an environment with a higher relative humidity, e.g. in the range of 70 to 90%RH and a temperature of 15°C to 50°C for at least 30 minutes, e.g. a time period between 30 minutes and 60 minutes. According to another alternative, this water content or humidity may be obtained by keeping the baked unleavened food sheet in an environment with controlled temperature of 15°C to 40°C, such as in the range of 15°C to 28°C, e.g. about ambient temperature, and a lower relative humidity, like a relative humidity of 55 to 75%RH, also for a period of more than 30 minutes, e.g. 2h, 5h, 12h, 24h or even up to some days, like 48h, 60h or even 72h. Optionally a steaming step, and any of such conditioning steps using said higher or said lower relative humidity, or a sequence of conditioning steps, the first step using first said higher and thereafter the second step using said lower relative humidity may be applied.

Most preferably, both sides of the unleavened food sheets are exposed to this environment simultaneously, and if two or more conditioning steps are used, at least during the first conditioning step.

After baking this unleavened food sheet, and optionally after conditioning of the baked unleavened food sheet, the cases are made. This may be done by shaping the unleavened food sheet or sheets, and connecting surfaces of the sheet to each other. This connection may be achieved by making a surface which is to stick to another surface, wet, and thereafter contacting, optionally pressing this wetted surface to a surface of the sheet to be adhered to. As such complex cases may be made. During the course of shaping the case, a filling may be provided in the open case, which is thereafter closed by a piece of unleavened food sheet.

When a shaped sheet is used, the indentation or indentations may be filled with the filling. They may be filled completely or only partially. Once filled, a second unleavened food sheet may be used to close the indentations. As an example, a flat unleavened food sheet may be adhered to the side of the shaped sheet where the concavity of the indentations is present. As such a case is made having one non-flat sides, the void between the indentation of the non-flat side and the flat side being partially or completely filled with filling.

Alternatively, the indentations in a sheet are filled with a filling, after which a second shaped sheet is used to close the indentations. As an example, a second unleavened food sheet may be adhered to the side of the shaped sheet where the concavity of the indentations is present, this second unleavened food sheet having its side where the concavity of the indentations is present directed to the side of the first unleavened food sheet where the concavity of the indentations, being partially or fully filled, is present. As such a case is made having two non-flat sides, the void between the indentations being maximally half filled with filling. The indentation may have the form of a cylindrical cap, surrounded by a flat rim. Two rims of two such shaped sheets are connected to each other, thereby providing a shape of a flying saucer.

The filling may be a sherbet filling comprising one or more sugars, usually grinded sugars, like disaccharides, e.g. sucrose, lactose or maltose, monosaccharides, like dextrose, fructose or galactose, a powdery acid fit for consumption, like tartaric acid, and optionally additives like a colorant and/or an aroma. Once filled, the cavities are closed by a second sheet which has been conditioned. To cause the sheets to stick together, one of the sides which is to contact the other sheet, maybe wetted with water.

After having closed indentations of the first unleavened food sheet with either a flat unleavened food sheet or a second unleavened food sheet, the filled wafer may be cut from the composed sheets, in particularly in case more than one indentations are provided in one unleavened food sheet. This cutting may be e.g. die cutting.

To achieve such filled unleavened food sheet casing, the unleavened food sheets have become cold and are typically conditioned to the ambient atmosphere. According to the invention, these filled unleavened food sheet casing are subjected to a drying step or to a thermal heating.

According to the second aspect of the invention, an airtight-sealed package comprising a plurality of filled wafer is provided, the package being obtained by a method according to the first aspect of the invention.

This airtight-sealed package comprises a plurality of filled wafers, each filled wafer comprising an unleavened food sheet casing, which casing is closed and enclosing a filling. The compression force versus displacement curve of the filled wafers comprises on average at least a first breaking point and a second subsequent breaking point, hence comprises on average at least 2, possibly more than 2, most preferably 3 or more than 3 subsequent breaking points. Hence the compression force versus displacement curve of a representative number of the filled wafers is measured, the number of breaking points being counted and averaged for this representative number of filled wafers.

According to some embodiments, the compression force versus displacement curve of each of the filled wafers may comprise at least a first breaking point and a second subsequent breaking point. Possibly the compression force versus displacement curve of each of the filled wafers comprises more than 2, most preferably 3 or more than 3 subsequent breaking points. Possibly the compression force versus displacement curve of one or more of the filled wafers comprises 3, 4, 5, 6, 7, 8, 9, 10 or even more subsequent breaking points.

According to some embodiments, for the compression force versus displacement curve of the filled wafers, comprising at least a first breaking point and a second subsequent breaking point, the work done at the first breaking point may be less than or equal to 15 mJoule (mJ), possibly being less than or equal to 12 mJoule, such as less than or equal to 10 mJoule, e.g. less than or equal to less than or equal to 9 mJoule.

According to some embodiments, for the compression force versus displacement curve for each of the filled wafers comprises at least a first breaking point and a second subsequent breaking point, the work done at said first breaking point may be less than or equal to 15 mJ, possibly being less than or equal to 12 mJoule, such as less than or equal to 10 mJoule, e.g. less than or equal to less than or equal to 9 mJoule.Filled wafers of the package with a plurality of filled wafers provided according to a method according to the invention, have the effect that a very characteristic compression force versus displacement curve is provided, which results in a crunchy and crispy mouth feeling. The compression force versus displacement curves may show substantially no plastic deformation prior to a first rupture or breaking point, and substantial little work is needed to achieve this first breaking point.

According to a third aspect of the invention, filled wafers in an airtight-sealed package obtainable by a method according to the first aspect of the invention are provided.

According to a fourth aspect of the invention, filled wafers from an airtight-sealed package, each filled wafer comprising an unleavened food sheet casing are provided. The casing is closed and enclosing a filling. The compression force versus displacement curve of the filled wafers is substantially free of plastic deformation prior to the first breaking point.

This first breaking point is the breaking point appearing first along said curve following the curve from the origin onwards. The compression force versus displacement curve is obtained by subjecting the filled wafer, supported around its circumference by a static structure, to a compression force by means of a probe, the probe having a tip in the form of a cylinder with diameter of 38mm The tip is lowered downwards with a constant speed of 1mm/sec and the force necessary to achieve this displacement is monitored during this displacement at least every 0.1sec, and preferably every 0.01 sec. The tests ends upon complete rupture of the casing, or when the displacement made is 6 mm.

Hence the compression force versus displacement curve of the filled wafers comprise at least a second breaking point, said second breaking point appearing along a higher displacement in comparison with the displacement at the first breaking point.

A breaking point in the curve is to be understood as the first of a set of two points in the curve, the displacement between the first and second point being one displacement unit on the curve, and for which the first point shows a maximum value in load in the curve, the difference between the maximum load value of the first point and the load value of the second point being more than 1% of the load of the first point.

According to some embodiments, the compression force versus displacement curve of the filled wafers may comprise more than 2 breaking points.

The compression force versus displacement curve of the filled wafers may comprise 3, 4, 5, 6, 7 8, 9, 10 or even more breaking points

According to some embodiments, for at least 80% of said filled wafers, the equation $100* 2*(2*R0.5-R1)/R1$ may be less than or equal to 50%, wherein R1 is the compression force at the first breaking point of a filled wafer, D1 is the displacement at the first breaking point of this filled wafer and R0.5 is the compression force at half the displacement D1 for this filled wafer.

For a group of filled wafers as according to the invention, and measurements being made on individual filled wafers, there is a possibility that some of the measured filed wafers may fail, while for a significant number of the other filled wafers of the group of filled wafers as according to the invention the measurement will show the required property. Such outliers, showing atypical results within the particular group, of filled wafers but the number of outliers is less than 20%, preferably even less than 15% or even 10% or less. So preferably for at least 85% of said filled wafers, even mor preferably for a least 90% of said filled wafers, the equation $100* 2*(2*R0.5-R1)/R1$ is less than or equal to 50% applies, wherein R1 is the compression force at the first breaking point of a filled wafer, D1 is the displacement at the first breaking point of this filled wafer and R0.5 is the compression force at half the displacement D1 for this filled wafer. It is clear that the sampling must be done randomly, be statistically justified and done according to the rules of art.

More preferably, for at least 80%, and preferably more than 80%, of said filled wafers, the equation $100*2* (2*R0.5-R1)/R1$ is less than or equal to 40%, even less than or equal to 35%.

According to some embodiments, for said filled wafers, the average value of the equation $100* 2*(2*R0.5-R1)/R1$, averaged over the total of said filled wafers, may be less than or equal to 50%, wherein R1 is the compression force at the first breaking point of a filled wafer, D1 is the displacement at the first breaking point of this filled wafer and R0.5 is the compression force at half the displacement D1 for this filled wafer.

More preferably, for said filled wafers, the average value of the equation $100*2*(2*R0.5-R1)/R1$ is less than or equal to 45%,such as less than or equal to 40%, e.g. less than or equal to 35%, or even less than or equal to 30% of 25%.

It was found that this equation indicates when the compression force versus displacement curve of the filled wafers is substantially free of plastic deformation prior to the first breaking point.

When there is no breaking point, i.e. an end point of the curve after a plastic deformation, this equation cannot be calculated. When there is a breaking point, the curves where there is a significant plastic deformation, tend not to obey the requirement for this equation. This equation is the result of the comparison of slope coefficients.

When applying the following definitions, the above equation is in fact the comparison of the slope coefficient of the imaginary line (hereinafter line 1) between the origin of the curve and the load/displacement point at half the displacement of the first breaking point, to the slope coefficient of the imaginary line (hereinafter line 2) between this point and the breaking point.

The equation follows from the calculation:

-

$$\text{Slope coefficient line 1} = R_{0.5}/ D_{0.5} = R_{0.5}/(D_1 / 2) = 2*R_{0.5}/D_1$$

-

$$\text{Slope coefficient line 2} = (R_1-R_{0.5})/(D_1-D_{0.5}) = (R_1-R_{0.5})/(D_1 / 2) = 2*(R_1-R_{0.5})/D_1$$

-

$$\text{Slope difference} = 2*R_{0.5}/D_1 - 2*(R_1-R_{0.5})/D_1 = (4*R_{0.5}-2*R_1)/D_1$$

-

$$\text{Slope average} = [2*R_{0.5} + 2*(R_1-R_{0.5})]/2*D_1 = R_1/D_1$$

-

$$\text{Slope difference over slope average in \%} = 100* [(4*R_{0.5}-2*R_1)/D_1]/[ R_1/D_1] =$$
$$100*[(4*R_{0.5}-2*R_1)]/[ R_1] = 100*2*(2*R_{0.5}-R_1)/R_1$$

wherein

-    $R_1$ is the compression force at the first breaking point of a filled wafer,
-    $D_1$ is the displacement at the first breaking point of this filled wafer
-    $R_{0.5}$ is the compression force at $D_{0.5}$, and
-    $D_{0.5}$ is half the displacement $D_1$ (or Di/2)

In the compression force versus displacement curve of filled wafers comprising an unleavened food sheet casing, this casing being closed and enclosing a filling, the first part of the curve shows elastic behaviour, similar as for substantially any product. Since unleavened food sheets are natural product based sheets, the variation on measurements is significant. Also these sheets are to some extent porous, and compression tests usually show small but significant jumps in displacement when the load is increased for a very minor amount, which is likely due to the collapse of a pore or some pores, without causing damage to the whole sheet as such. Further, also the thickness of the sheet plays a role in the load needed to compress and break the sheet.

Filled wafers comprising an unleavened food sheet casing not having been subjected to the thermal or drying step as according to the invention, start to plastically deform quite early and very gradually, showing no clear cut off point between elastic and plastic behaviour. Some filled wafers comprising an unleavened food sheet casings, not according to the invention, rupture after a long plastic deformation with continuously increasing load. These wafers comprising an unleavened food sheet casings do not show breaking points along their compression/displacement curve.

Others filled wafers comprising an unleavened food sheet casings, not according to the invention, rupture after a relatively long plastic deformation and hereby show a breaking point, after which the compression/displacement curve again start to raise showing further plastic-like deformation behaviour without any further such breaking points being noticeable. These wafers comprising an unleavened food sheet casings show one, and typically only one, breaking points along their compression/displacement curve, which is preceded by a curve having a decreasing slope coefficient for the tangential lines, indicating plastic-like deformation. When calculating the equation as set out above, the result of the equation is relatively large, because the difference in slope of the first and the second line is relatively large.

The filled wafers comprising an unleavened food sheet casings according to the invention, have a clear different behaviour. After a relatively short elastic deformation, a sudden breaking point is noticed, after which the compression/-displacement curve again start to raise. During this further rise, usually one or more other breaking points are noticed, usually, but not necessarily along a curve which is no longer as steep as the part before the first breaking point. When calculating the equation as set out above, the result of the equation is smaller, because the difference in slope of the first and the second line is not that large.

The presence of a breaking point after substantially no plastic deformation, and optionally followed by one or more further breaking points, provide the consumer a crunchy, crispy, crackly, even rather brittle or fragile feeling when biting the unleavened food sheet casing. This opposite to the similar filled wafers not according to the invention, where the feeling is more tough.

It was further noticed, without having any information to the theory behind the effect, that the unleavened food sheet casings according to the invention tens less to stick in the mouth to the palate of the consumer, which is sometimes experienced as less enjoyable for similar filled wafers not according to the invention.

It was further noticed that the filled wafers according to the invention break much easier under a less large displacement applied. This, and in spite of a rather steep curvature in the elastic zone (i.e. a rather high slope), the energy needed to break the unleavened food sheet of the filled wafer is lower.

For an unleavened food sheet with thickness in the range of 0.25mm to 1.5mm, a displacement of on average less than or equal to 3mm is needed to achieve the first breaking point, and in most cases even on average less than or equal to 2mm, even on average less than or equal to 1.5mm. When compared with the same filled wafers having not been subjected to the thermal or drying treatment according to the invention, either do not show a breaking point before a displacement of 6mm, or have, on average, a breaking point at a displacement of more than 3mm.

According to some embodiments, the filled wafer may comprise two unleavened food sheets, each providing a part of the casing, said two unleavened food sheets being connected one to the other thereby closing the casing, said mark is provided to the at least one unleavened food sheet prior to connected the two unleavened food sheets to each other.

According to some embodiments, the filled wafer may be obtainable, even obtained from an airtight-sealed packaging obtained by a method according to the first aspect of the invention.

According to some embodiments, the filled wafer may comprise a sherbet filling, optionally with added flavours like fruit or cola flavour.

Any, some or even all aspects of one of the aspects of the present invention may be combined and used in combination with one, more or all features of any other aspect of the present invention.

### Brief Description of the Drawings

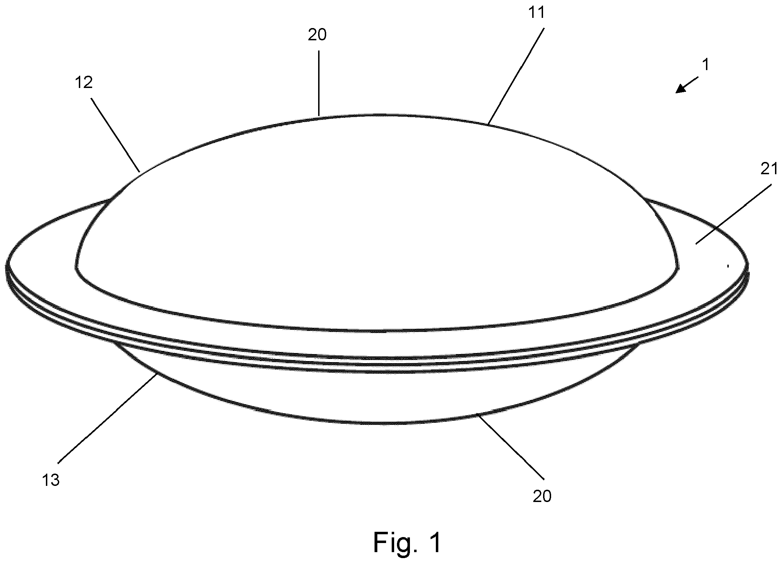

Fig. 1 illustrates schematically a filled wafer according to the present invention.

Fig. 2 illustrates a compression force versus displacement curve of a filled wafer according to the invention.

Fig. 3 illustrates a compression force versus displacement curve of a filled wafer as known in the art.

In different figures, the same reference refers to the same or a similar feature.

### Detailed Description of Embodiment(s)

According to the present invention, a flying saucer 1, i.e. a filled wafer comprising an unleavened food sheet casing 11 being filled with sherbet filling is provided. The unleavened food sheet casing is provided by two parts 12, 13 of shaped unleavened food sheet, each having an indentation 20 having the shape of a spherical cap, surrounded by a flat rim 21. The rims of the two parts are connected to each other after filling of one of the indentations, at least partially, with sherbet filling, the latter comprising sugars, food acid, colorants and flavouring.

The unleavened food sheets are made from a batter, which is provided first. The batter comprises natural corn starch, water, vegetable oil and optionally some colorants. The weight ratio of starch to water is in the range of 0.7 to 1.0. Food grade oil is added in the range of 0 to 1 litre, more preferred in the range of 0.2 litre to 0.5 litre, per 100 litre water, and 50 to 100 gram curcumin per 100 litre water (yellow colorant). This mixture is thoroughly mixed to a batter of uniform colour and composition. It is understood that other colorants to obtain a yellow unleavened food sheet, or other colours to obtain any other colour for the unleavened food sheet may be added. Colorants may be omitted to obtain unleavened food sheets without added colour.

The batter is now provided to a double sided baking tray or baking iron. The baking tray has a male and female part. The female part has a number of spherical cap indentations on its surface, while the male part has the same number of protrusions, each protrusion having the shape of a spherical cap. The indentations and protrusions are positioned such that, upon closing the baking iron, in each indentation a protrusion is inserted. The batter is provided to the baking tray and the baking tray is closed. The batter flows between the male and female part of the baking tray, after which the baking tray is heated to a temperature in the range of 100°C to 150°C, during a period of 0.5 to 1.5 minutes.

A profiled baked unleavened food sheet is provided having a flat sheet with indentations where the protrusions and recesses were present during baking. The thickness of the sheet may be tuned by the amount of the batter being provided, and the relative positioning of the parts of the baking tray during baking. As an example, a sheet with a thickness in the range of 0.9 mm to 1.1mm may be provided.

The freshly baked but extremely brittle unleavened food sheet is now left exposed to the ambient. The temperature of the unleavened food sheet lowers as the unleavened food sheet cools due to the ambient air conditions. The water content of the unleavened food sheet also raises, as the dry unleavened food sheet takes humidity from the ambient air.

Alternatively, in order to prepare the unleavened food sheet for lasering, the unleavened food sheets are exposed to a conditioning step or steps, like exposing the unleavened food sheet during a relative short time, e.g. some seconds to some minutes, to saturated steam, exposing the unleavened food sheet to conditions of 70 to 90%RH and a temperature of 15°C to 50°C for at least 30 minutes, e.g. a time period between 30 minutes and 60 minutes, or exposing the unleavened food sheet to conditions of 15°C to 40°C, and a relative humidity of 55 to 75%RH, for a period of more than 30 minutes, e.g. 2h, or more. Alternatively, two of the above treatments are used one after the other. Such treatment or treatments raise the water content of the unleavened food sheet, to more than 1%w, even to 5%w or more, or over 10%w or more. The temperature of the unleavened food sheet will be less than 100°C, even less than 50°C.

The unleavened food sheets, are now subjected to a filling and closing step. A first sheet and a second sheet is provided. Sherbet filling is provided in the concave sides of the spherical caps of one of the unleavened food sheets. The surface of the rims at the concave side of one or both the unleavened food sheets is wettened, and the two unleavened food sheets are placed one on top of the other, with the surfaces at the concave sides of the spherical caps contacting. Due to the wetting, the two surfaced will stick one to the other. The flying saucers are now die cut from the two stacked sheets, by using a circular die cutting adjacent the spherical caps, thereby providing the two caps joined with a rim of about 1mm width.

According to the invention, these filled wafers, in this case flying saucers, are subjected to a further drying and temperature treatment being a heat treatment. As an example, a set of filled wafers is subjected to a stream of heated air at a temperature of about 60°C for a period of about 1 hour. Once treated, the set of filled wafers is kept in an airtight sealed container while cooling to ambient. The airtight sealed container is kept sealed until the filled wafers are packed in groups of about 10 to 1500. Filled wafers. Packaging takes place within 30 days from the thermal treatment. The groups of filled wafers are packed in a film-based package e.g. an Alu based film package, airtight sealed after filling. Alternative a PP-box type airtight closing was used. After filling the package is airtight sealed. The water content of the packed filled wafers is in the range of 2.5 to 3%w. The package has a water vapour transmission rate (WVTR) of less than 0.4 gram per square meter per day (g/m$^2$/d).

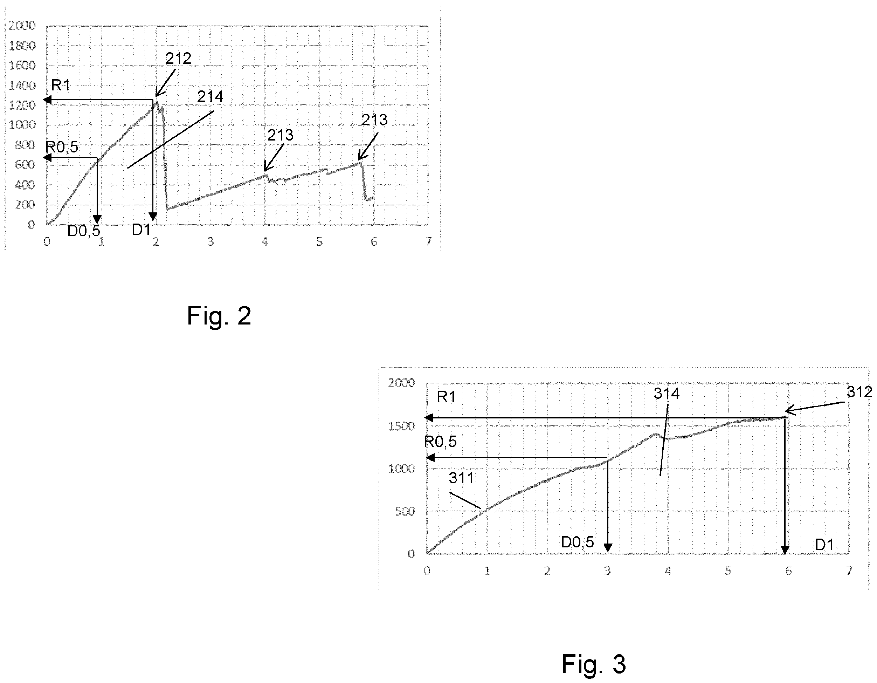

When subjecting the filled wafers, even after this storage in said airtight sealed container, to a compression force versus displacement test, breaking curves are obtained of which one example is shown in figure 2.

Identical filled wafers, but not subjected to the thermal treatment, and stored airtight in a similar way, were subjected to the compression force versus displacement test, resulting in the curves of which an example is shown in figure 3.

The compression force versus displacement curve is obtained by subjecting the filled wafer, supported around its circumference by a static structure, to a compression force by means of a probe, the probe having a tip in the form of a cylinder with diameter of 38mm. The tip is lowered downwards with a constant speed of 1mm/sec and the force necessary to achieve this displacement is monitored during this displacement every 0.01sec. The tests ends upon complete rupture of the casing, or when the displacement made is 6 mm. The curve is set out as force applied in ordinate or Y-axis (expressed in gram) in view of the displacement in abscissa or X-axis (expressed in mm).

9 filled wafers 201 to 209 were subjected to the compression force versus displacement test. All of these curves were similar to the curve of sample 201. A very steep and relatively straight slope 211 is noticed until a first breaking point 212 is reached. The curves show subsequent breaking points 213. The surfaces 214 under the curve 201 (hence g*mm) are set out in table I. Also the values of R0.5 and D0.5, and R1 and D1 are shown in table I, as well as the value for 100* (2*R0.5-R1)/R1.

9 filled wafers not having been subjected to the thermal treatment were subjected to the compression force versus displacement test as well, as shown in figure 3. All of these curves were similar to the curve 301.the curve has a relatively flat and low slope 311, while usually no real breaking point 312 is reached. The curves show no subsequent breaking points. The surfaces 314 under the curve 301 (hence g*mm) are set out in table I. Also the values of force F0.5 applied at 50% of first breaking point and displacement D0.5 applied at 50% of first breaking point, the force F1 applied at first breaking point and displacement D1 applied at the first breaking point are shown in table I, as well as the value for 100* (2*R0.5-R1)/R1.

Table I (° = no breakpoint)

| sampel | R0.5 (g) | D0.5 (mm) | R1 (g) | D1 (mm) | 100*2*(2*R0.5-R1)/R1 | Presence of subsequent breaking points |
|---|---|---|---|---|---|---|
| 201 | 766 | 1.02 | 1232 | 2.03 | 48.70 | y |
| 202 | 575 | 0.40 | 1200 | 0.80 | 8.50 | y |
| 203 | 397 | 0.55 | 787 | 1.10 | 1.78 | y |
| 204 | 617 | 0.83 | 1187 | 1.66 | 7.75 | y |
| 205 | 629 | 0.88 | 1257 | 1.76 | 0.08 | y |
| 206 | 561 | 0.43 | 931 | 0.85 | 40.82 | y |
| 207 | 454 | 0.46 | 885 | 0.92 | 5.20 | y |
| 208 | 725 | 0.91 | 1268 | 1.81 | 28.64 | y |
| 209 | 645 | 0.91 | 1265 | 1.82 | 3.79 | y |
| 301(°) | 1198 | 3.00 | 1879 | 6.00 | 55.03 | n |
| 302 | 1083 | 2.98 | 1609 | 5.95 | 69.36 | n |
| 303 | 1252 | 2.07 | 1340 | 4.14 | 58.11 | n |
| 304 | 1058 | 1.82 | 1665 | 3.64 | 54.25 | n |
| 305 | 1201 | 3.00 | 1577 | 5.99 | 104.62 | n |
| 306 | 1037 | 2.61 | 1582 | 5.22 | 62.13 | n |
| 307 | 681 | 1.33 | 996 | 2.66 | 73.59 | n |
| 308 | 1137 | 2.97 | 1553 | 5.94 | 92.72 | n |
| 309 | 1188 | 2.64 | 1842 | 5.27 | 57.80 | n |

As can be seen in table I, the first breaking points for the samples 201 to 209 2 are reached at on average less force applied, and causing on average a smaller displacement as compared with the samples 301 to 309. The curves one of which being shown in figure 2, are significantly steeper, show more than one breaking points and the comparison formula of slopes in the first and second part of the curvature prior to the first breaking point, is on average significantly smaller as compared to the curves of the prior art samples. The comparison formula of slopes in the first and second part of the curvature prior to the first breaking point, results for the curves of figures 2 to be less than 50% for each curve, and on average for all curves together.

Other sets of samples of prior art and according to the invention were subjected to the same compression force versus displacement test. Except for the INV6, twenty tests were performed, the average deviation of the number of breaking points measured, as well as the work done before reaching this first breaking point, is set out in the table. Also the minimum and maximum number of breaking points for the sample set are mentioned. The measurement figures are set out under in table II. It can be noticed that the number of breaking points for filled wafers being part of a package according to the invention is significantly higher as the ones of packages of prior art. the work done before the first breaking point for filled wafers being part of a package according to the invention is significantly lower as the ones of packages of prior art. The samples INV1, INV2 and INV3 are taken from a package according to the invention, which has been stored for one month. The package was a PP airtight box. The samples INV4, INV5 and INV6 are taken from the package according to the invention shortly after packaging.

Table II (° = no breakpoints)

| | | filled wafers from package according to prior art | | | | filled wafers from package according to the invention | | | | | |
|---|---|---|---|---|---|---|---|---|---|---|---|
| sample nr | | PrA1 | PrA2 (°) | PrA3 | PrA4 | INV1 | INV2 | INV3 | INV4 | INV5 | INV6 |
| # wafers tested | | 20 | 20 | 20 | 20 | 20 | 20 | 20 | 20 | 20 | 10 |
| breaking points (-) | average | 0,5 | 0,0 | 1,2 | 1,6 | 7,6 | 7,4 | 6,6 | 8,4 | 7,5 | 8,3 |
| | deviation | 0,8 | 0,0 | 0,8 | 0,6 | 2,5 | 2,8 | 1,8 | 2,1 | 2,5 | 2,7 |
| | minimum | 0(°) | 0 | 0(°) | 0(°) | 4 | 3 | 4 | 5 | 4 | 4 |
| | maximum | 3 | 0 | 4 | 2 | 12 | 14 | 10 | 14 | 12 | 13 |
| work at first breakign point (mJ) | average | 43,13 | 58,41 | 31,24 | 16,77 | 5,84 | 4,92 | 7,91 | 4,78 | 3,15 | 2,66 |
| | deviation | 20,03 | 9,43 | 18,65 | 16,03 | 6,02 | 5,70 | 6,49 | 4,29 | 3,63 | 1,89 |

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1.   A method to provide a package comprising a plurality of filled wafers, each filled wafer comprising an unleavened food sheet casing, said casing enclosing a filling, wherein said method comprises

   - Proving unleavened food sheet casings, the casings each enclosing a filling;
   - treating these filled unleavened food sheet casings with

      ◦ a thermal treatment wherein the filled unleavened food sheet casings are subjecting to an increased temperature and/or
      ◦ subjecting the unleavened food sheet casings with filling to a drying treatment;

   - packing said treated filled wafers in an airtight-sealed packaging.

2.   A method according to claim 1, wherein the airtight-sealed packaging is provided from packaging product having a water vapor transmission rate of less than or equal to 0.55 gram per square meter per day.

3. A method according to any one of the claims 1 to 2, wherein the filled unleavened food sheet casings are subjected to at least a thermal treatment.

4. A method according to claim 3, wherein said thermal treatment comprises heating the filled unleavened food sheet casings, either individually or simultaneously, to a temperature of at least 30°C.

5. A method according to any one of the claims 3 to 4, wherein said thermal treatment comprises heating the filled unleavened food sheet casings, either individually or simultaneously, to a temperature of less than or equal to 100°C.

6. A method according to any one of the claims 3 to 5, wherein said thermal treatment comprises heating the filled unleavened food sheet casings, either individually or simultaneously, during a period of at least 10 sec.

7. A method according to any one of the claims 3 to 6, wherein said thermal treatment has a temperature profile.

8. A method according to any one of the claims 3 to 7, wherein said thermal treatment comprises a ventilated thermal treatment action.

9. A method according to any one of the preceding claims, wherein said thermal treatment of the filled unleavened food sheet casings and/or the drying treatment provide thermally treated filled unleavened food sheet casings having a water content of more than or equal to 0.5%w and less than or equal to 5%w.

10. A method according to any one of the preceding claims, further comprising the step of storing the treated filled wafers in an airtight storage, optionally cooling the treated filled wafers in said airtight storage.

11. An airtight-sealed package comprising a plurality of filled wafers, each filled wafer comprising an unleavened food sheet casing, said casing being closed and enclosing a filling, **characterized in that** the compression force versus displacement curve of the filled wafers comprises on average at least a first breaking point and a second subsequent breaking point, preferably comprises on average at least 2, more preferred more than 2, most preferably 3 or more than 3 subsequent breaking points.

12. An airtight-sealed package according to claim 11, wherein the airtight-sealed packaging is provided from packaging product having a water vapor transmission rate of less than or equal to 0.55 gram per square meter per day.

13. An airtight package according to any one of the claims 11 to 12, wherein the compression force versus displacement curve of each of the filled wafers comprises at least a first breaking point and a second subsequent breaking point.

14. An airtight package according to any one of the claims 11 to 13, wherein for the compression force versus displacement curve of the filled wafers comprises at least a first breaking point and a second subsequent breaking point, the work done at said first breaking point is less than or equal to 15 mJ..

15. An airtight package according to claim 14, wherein for the compression force versus displacement curve for each of the filled wafers comprises at least a first breaking point and a second subsequent breaking point, the work done at said first breaking point is less than or equal to 15 mJ.

EP 4 588 352 A1

Fig. 1

Fig. 2

Fig. 3

EUROPEAN SEARCH REPORT

Application Number

EP 24 15 2387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | BE 1 021 600 B1 (ASTRA SWEETS N V [BE]) 17 December 2015 (2015-12-17) * the whole document * | 1-15 | INV. A21D13/32 A21D13/36 A23G9/50 |
| X | BE 1 021 597 B1 (ASTRA SWEETS N V [BE]) 17 December 2015 (2015-12-17) * the whole document * | 1-15 | A21C15/02 A23G9/48 |
| X | US 2003/203077 A1 (CHARLES BART [US]) 30 October 2003 (2003-10-30) * the whole document * | 1-15 | |
| X | Anonymous: "Flying Saucers", , 7 July 2010 (2010-07-07), XP055115954, Retrieved from the Internet: URL:http://www.cooksinfo.com/flying-saucers [retrieved on 2014-04-30] * the whole document * | 11-15 | |
| X | Alamy Limited: "Paquet de sac de bouclier des soucoupes volantes de sorbet wafer rempli des disques présents sur fond blanc Photo Stock - Alamy", , 17 December 2019 (2019-12-17), XP093173011, Retrieved from the Internet: URL:https://www.alamyimages.fr/paquet-de-sac-de-bouclier-des-soucoupes-volantes-de-sorbet-wafer-rempli-des-disques-presents-sur-fond-blanc-image336836503.html [retrieved on 2024-06-11] * the whole document * | 11-15 | TECHNICAL FIELDS SEARCHED (IPC) A21D A23G F26B A21C |

-/--

The present search report has been drawn up for all claims

| Place of search | Date of completion of the search | Examiner |
|---|---|---|
| The Hague | 11 June 2024 | Piret-Viprey, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | **Application Number** EP 24 15 2387 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Tuck Shop 200 Retro Flying Saucers < Truly Scrumptious Sweets", , 26 August 2013 (2013-08-26), pages 1-2, XP055115524, Retrieved from the Internet: URL:http://web.archive.org/web/20130826193 518/http://trulyscrumptiousboutique.co.uk/ products-page/retro-sweets-wholesale/tuck- shop-200-retro-flying-saucers/ [retrieved on 2014-04-28] * the whole document * ----- | 11-15 | |
| A | US 4 391 832 A (HAAS SR FRANZ [AT] ET AL) 5 July 1983 (1983-07-05) * column 1, line 35 - line 45 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 11 June 2024 | Piret-Viprey, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2387

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2024

| Patent document cited in search report | | Publication date | Patent family member(s) | | Publication date |
|---|---|---|---|---|---|
| BE 1021600 | B1 | 17-12-2015 | NONE | | |
| BE 1021597 | B1 | 17-12-2015 | NONE | | |
| US 2003203077 | A1 | 30-10-2003 | NONE | | |
| US 4391832 | A | 05-07-1983 | AR | 230553 A1 | 31-05-1984 |
| | | | AT | 373473 B | 25-01-1984 |
| | | | BR | 8103813 A | 09-03-1982 |
| | | | DD | 159694 A5 | 30-03-1983 |
| | | | DE | 3123927 A1 | 29-04-1982 |
| | | | ES | 8203568 A1 | 01-04-1982 |
| | | | FR | 2484785 A1 | 24-12-1981 |
| | | | GB | 2077566 A | 23-12-1981 |
| | | | IT | 1171314 B | 10-06-1987 |
| | | | JP | S5726547 A | 12-02-1982 |
| | | | JP | S6253133 B2 | 09-11-1987 |
| | | | US | 4391832 A | 05-07-1983 |
| | | | US | 4440072 A | 03-04-1984 |
| | | | YU | 137081 A | 30-09-1983 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BE 1021600 B1